Europäisches Patentamt

European Patent Office

Office européen des brevets

(19)

(11) Publication number: 0 164 459
A1

(12) **EUROPEAN PATENT APPLICATION**

(21) Application number: 84303807.6

(22) Date of filing: 05.06.84

(51) Int. Cl.⁴: **D 06 M 17/00**
**A 41 D 27/24, A 41 D 27/06**

(43) Date of publication of application:
18.12.85 Bulletin 85/51

(84) Designated Contracting States:
DE FR GB IT

(71) Applicant: JAPAN SYNTHETIC RUBBER CO., LTD.
11-24, Tsukiji-2-chome Chuo-ku
Tokyo(JP)

(72) Inventor: Noda, Toshio
1701, Shimonumabe Nakahara-ku
Kawasaki-shi(JP)

(71) Applicant: Tokyo Men's Apparel Corporation
4-1, Minato-2-chome Chuo-ku
Tokyo(JP)

(72) Inventor: Teramoto, Toshio
2-401, Greenhill-Kamoshidahigashi
533, Kamoshidacho Midori-ku Yokohama(JP)

(72) Inventor: Niinomi, Masahiro
76-9, Kogasaka
Machida-shi(JP)

(72) Inventor: Kamiyama, Kazunari
13-12, Higashi-1-chome Sattemachi
Kitakatsushika-gun Saitama-ken(JP)

(72) Inventor: Uchiyama, Akira
47-6, Sakaechodori-4-chome Tsurumi-ku
Yokohama(JP)

(72) Inventor: Harada, Takashi
3919-4, Midorigaokaminamicho
Ueno-shi(JP)

(74) Representative: Ruffles, Graham Keith et al,
MARKS & CLERK 57-60 Lincoln's Inn Fields
London WC2A 3LS(GB)

(54) **Method of basting in the tailoring of clothes.**

(57) In a method of basting in the tailoring of clothes wherein an adhesive is used to secure the cloth, the improvement wherein said adhesive comprises as the main component a liquid, addition-reaction-type silicone polymer. Said basting method is applicable to basting interlinings and·or shoulder pads to front bodices, basting two back bodices and the like to simplify and automatize the tailoring process.

EP 0 164 459 A1

## METHOD OF BASTING IN THE TAILORING OF CLOTHES

This invention relates to a method of basting in the tailoring of clothes.

In the process for tailoring clothes composed of 2 or 3 layers selected from suitings, linings and interlinings used in clothings, particularly coats and suits, basting has heretofore been necessary for preventing the two or three layers from slipping out of position or preventing balance from being broken when sewing different fabrics, for example, suitings and linings. Accordingly, the basting working is important for obtaining a good quality in the sewing working.

In general, when two sheets of cloth are basted, a jamping sewing machine is used. In the basting of a three-dimensional portion such as the basting of interlinings or the basting of facings, the sewing must be conducted so that the outer track cloth absorbs the difference in length from the inner track cloth or the room for preventing the outer track cloth from being partially stretched. Therefore, the sheets of cloth must be delicately manipulated by hand such as shirring or elongating the cloth while running the sewing machine. Thus, workers are required to have experience and skill for such a complicated technique. Therefore, the quality and the productivity are not stable. Also, the basting of interlinings is the working of securing the haircloth and the front bodice which is the basic working in tailoring. However, the front bodice must be three-dimensionally designed to accommodate the volume of chest and the indention of waist, and hence, working is difficult. A difficult technique is required to meet the requirements that after the basting of interlinings the front bodice should not be in excess of the interlinings and that the warp of the cloth is straight. As a further requirement, the finishing should be such that the cloth is naturally internally curled correspondingly to the curve of bust and waist. Accordingly, in the conventional sewing process, the basting working including conventional basting and basting of interlinings and shoulder pads in tailoring a suit cannot be omitted, and the working is completely manual and requires skill. Therefore, it is difficult to increase the production efficiency and uniformize the products by automatization and labor-reduction.

This invention aims at providing a basting method which can be substituted for the conventional method of basting sheets of cloth with thread and which comprises applying a thermosetting adhesive comprising as the main component a liquid, addition-reaction-type silicone polymer to the necessary peripheral portions of one of the sheets of cloth to be secured, setting the sheets with the adhesive between them on a base board or the fixed base of a press and heat-pressing the resulting assembly in order to stabilize the quality and increase the production efficiency, thereby reducing skillful manual labor and enabling the partial automatization of sewing operation. Thus, said method enables a product having a uniform and stable quality to be produced in a short time, and increases the production efficiency.

According to this invention, there is provided a method of basting sheets of cloth in tailoring clothes, which comprises applying a thermosetting adhesive comprising as the main component a liquid, addition-reaction-type silicone polymer, to the necessary portions of one of the sheets of cloth, setting the cloth with the adhesive and the other sheet or sheets of cloth on a base board so that the adheisve is present between the sheets of cloth, heat-pressing the resulting assembly to secure the sheets of cloth with the adhesive. The thus basted sheets can be easily peeled off from each other by hand without damaging the cloth.

In this invention, the material for the cloth to be used is not critical, and may be of a natural fiber such as cotton, linen, wool, cashmere or the like, or a regenerated or semi-synthetic fiber such as rayon, acetate or the like, or a synthetic fiber such as polyester fiber, polyamide fiber, acrylic fiber or the like. These may be used alone or in admixture.

Other objects and advantages of this invention will become apparent from the following description and the accompanying drawings.

- 4 -

0164459

In the accompanying drawings, Fig. 1 shows a rough plan view of haircloth used in the basting method of this invention, Fig. 2 shows a rough plan view of a shoulder pad used in the present basting method, Fig. 3 to Fig. 6 show rough plan views of each step of basting interlinings for the basting method of this invention, Fig. 7 shows a longitudinal section of a nozzle used in applying an adhesive to cloth in the basting method of this invention, Fig. 8 and Fig. 9 show rough plan views of the steps of another mode of the basting method of this invention, Figs. 10 - 12 show rough plan views of the steps of basting the facing, and Figs. 13 - 15 show rough plan views of the steps of basting two back bodices.

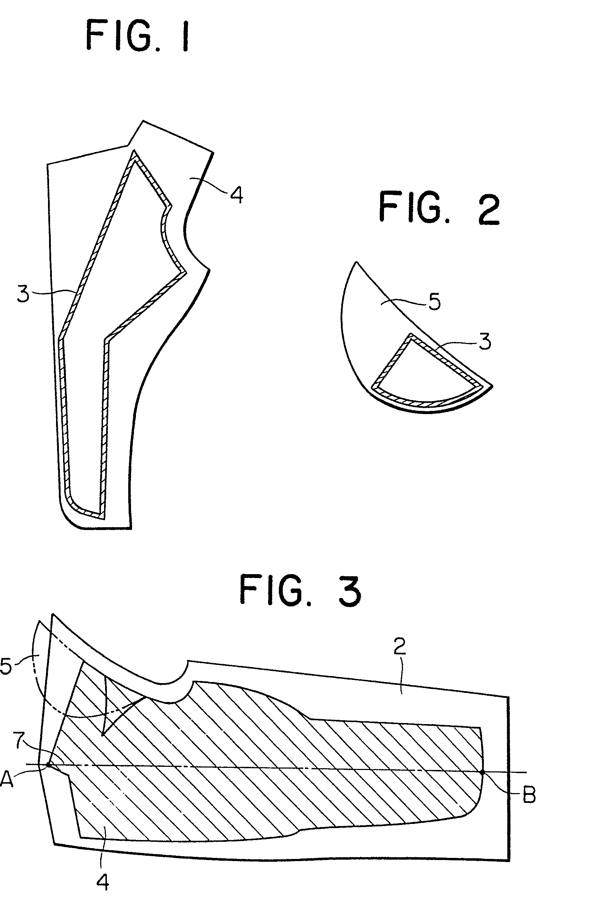

Common reference numbers are used in Figs. 1 - 15, and reference numeral 1 refers to the movable member of a press, 2 to the fixed base of a press, 3 to an adhesive, 4 to haircloth, 5 to a shoulder pad, 6 to a front bodice, 7 to the warp of the haircloth 4, 8 to the warp of the front bodice 6, A and B to points on the base board 2 for fitting the warp 7 of the haircloth 4 or the warp 8 of the front bodice 6, 9 to the final sewing line, 10 to points for fitting the haircloth 4 and the front bodice 6, 11 to the margin to sew up the front bodice 6, 12 to the facing, 13 to the margin to sew up the facing, 14 and 14' to the back bodices, 15 and 15' to the margines to sew up the back bodices 14 and 14', $a$ to the diameter of the nozzle, and $b$ to the wall thickness of the end of the nozzle.

As shown in Figs. 1 and 2, the present adhesive 3 is applied to the haircloth 4 and the shoulder pad 5 by means of an appropriate commercially available application machine. The adhesive is applied in such a thickness and a width that the adhesive does not ooze through even a thin cloth for summer suit, preferably a thickness of 0.01 - 2 mm and a width of 0.1 - 10 mm, more preferably a thickness of 0.05 - 0.8 mm and a width of 0.3 - 3 mm.

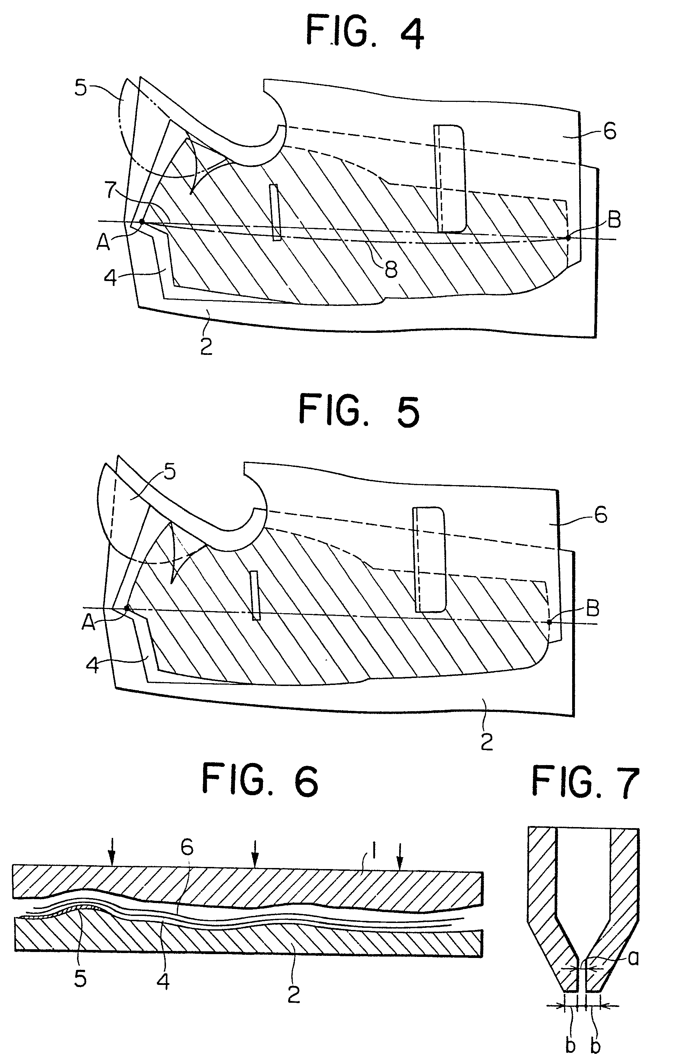

Preferably, the application machine is such that the adhesive can be extruded continuously or intermittently at a constant rate in the form of a fine line, and the nozzle used in this case has preferably a caliber of 0.2 - 1 mm (see $a$ in Fig. 7) and a wall thickness of 0.1 - 0.8 mm at the tip (see $b$ in Fig. 7). When $a$ is less than 0.2 mm, the nozzle tends to be blocked with the adhesive, and when it is more than 1 mm, the adhesive is apt to ooze through the cloth. When $b$ is less than 0.1 mm the strength of the nozzle is not sufficient, and when it exceeds 0.8 mm, the adhesive adhere to the outlet of the nozzle to make it impossible for the adhesive to be extruded in the form of a fine line.

The adhesive used in this invention is a composition comprising a liquid, addition-reaction-type silicone polymer as the main component; a curing agent; and if necessary, an antistatic agent, a filler, a copolymerizable monomer and other additives.

The liquid, addition-reaction-type silicone polymer is a polysiloxane compound which can be converted into a higher molecular weight polymer by addition reaction which proceeds upon heating in the presence of a curing agent. The said polysiloxane compound includes, for example, poly-$C_{1-12}$alkyl-$C_{2-12}$alkenylsiloxane, poly-substituted $C_{1-12}$alkyl-$C_{2-12}$alkenylsiloxane (substituent: halogen or the like), polyphenyl-$C_{2-12}$alkenylsiloxane, poly-substituted phenyl-$C_{2-12}$alkenylsiloxane (substituent: alkyl, halogen or the like), poly-$C_{1-12}$alkylhydrogensiloxane, poly-substituted $C_{1-12}$alkylhydrogensiloxane (substituent: halogen or the like), polyphenylhydrogensiloxane, and poly-substituted phenylhydrogensiloxane (substituent: alkyl, halogen or the like), and these may be used alone or in admixture. Preferably, a mixture of the polyalkylhydrogensiloxane, the poly-substituted alkylhydrogensiloxane, the polyphenylhydrogensiloxane or the poly-substituted phenylhydrogensiloxane with one of the other siloxanes may be used.

The curing agent includes organic peroxides such as 2,4-dichlorobenzoyl peroxide, o-methylbenzoyl peroxide, p-chlorobenzoyl peroxide, o-chlorobenzoyl peroxide, lauroyl peroxide, bis-3,5,5-trimethylhexanoyl peroxide, benzoyl peroxide, dicumyl peroxide, 1,1-di-t-butylperoxy-3,3,5-trimethylcyclohexane, t-butylperoxy-pivalate, t-butylperoxy-2-ethylhexanoate, bis(4-t-butylcyclohexyl)peroxydicarbonate, methyl ethyl ketone peroxide and the like; platinum compounds, rhodium compounds, palladium compounds, etc. They may be used alone or in admixture of two or more. Preferably, a combination of an organic peroxide with a platinum compound is used.
Among the organic peroxides, 2,4-dichlorobenzoyl peroxide
is preferred.  The proportion of the organic peroxide
is preferably 1 - 30 parts by weight, more preferably
5 - 20 parts by weight, per 100 parts by weight of the
silicone polymer.

In this invention, antistatic agents may be used
alone or in combination of two or more, and the proportion thereof is preferably 0.01 to 10 parts by weight,
more preferably 0.1 to 5 parts by weight, per 100 parts
by weight of the silicone polymer.  As the antistatic
agent, there may be used anionic surfactants, cationic
surfactants, nonionic surfactants and amphoteric surfactants.  As the anionic surfactants, there may be used,
for example, fatty acid soap, alkylsulfate, sodium
dodecylbenzenesulfonate, and the like, and as the
cationic surfactants, there may be used, for example,
octadecyltrimethylammoniumchloride, dodecyltrimethyl-
ammoniumchloride, alkyltrimethylammoniumchloride,
hexadecyltrimethylammonium chloride, oxyethylenedodecyl-
amine, polyoxyethylenedodecylamine, an isopropanol
solution of alkylolaminopropyldimethyl-2'-hydroxylethyl
ammonium salt and the like; and as the nonionic surfactants,
there may be used, for example, polyoxyethylenestearylether,
polyoxyethyleneoctylphenolether, fatty acid diethanol
amide and the like; and as the amphoteric surfactants,
there may be used, for example, dimethylalkylbetaine
and the like.

In the case of using the antistatic agents, a fine line of adhesive can be easily obtained when the adhesive is extruded from the application machine.

Examples of the optionally added additives include fillers and copolymerizable monomers. The fillers include, for example, carbon black, anhydrous or hydrous silicone dioxide, calcium carbonate, calcium silicate, magnesium carbonate, titanium oxide, zinc oxide, clay, alumina, talc and the like. The proportion of the filler is preferably 0 - 300 parts by weight per 100 parts by weight of the silicone polymer. Preferable examples of the polymerizable monomer are polyfunctional acrylate or methacrylate monomers, for example, polyethylene glycol diacrylate, polyethylene glycol dimethacrylate, 1,3-butylene glycol diacrylate, 1,3-butylene glycol dimethacrylate, 1,4-butylene glycol diacrylate, 1,4-butylene glycol dimethacrylate, 1,6-hexane glycol diacrylate, 1,6-hexane glycol dimethacrylate, neopentyl glycol diacrylate, neopentyl glycol dimethacrylate, dipropylene glycol diacrylate, dipropylene glycol dimethacrylate, polypropylene glycol diacrylate, polypropylene glycol dimethacrylate, 2,2-bis(4-acryloxydiethoxyphenyl)propane, 2,2-bis(4-methacryloxydiethoxyphenyl)propane, 2,2-bis(4-acryloxypropyldiphenyl)propane, trimethylolpropane triacrylate, trimethylolpropane trimethacrylate and the like. The proportion of the copolymerizable monomer is preferably 0 to 20 parts by weight per 100 parts by weight of the silicone polymer.

The viscosity and other properties of the adhesive obtained may be varied depending upon the kind and proportion of the above additives added. The fluidity · and other characteristics of the adhesive in the heat-pressing and the elasticity, hardness and other characteristics of the adhesive after the heat-pressing may also be varied depending upon the kind and amount of the additives added. The viscosity of the adhesive is preferably 1,000 to 5,000,000 cP more preferably 100,000 to 2,000,000 cP in view of the applicability of the adhesive and prevention of the adhesive from oozing through the cloth.

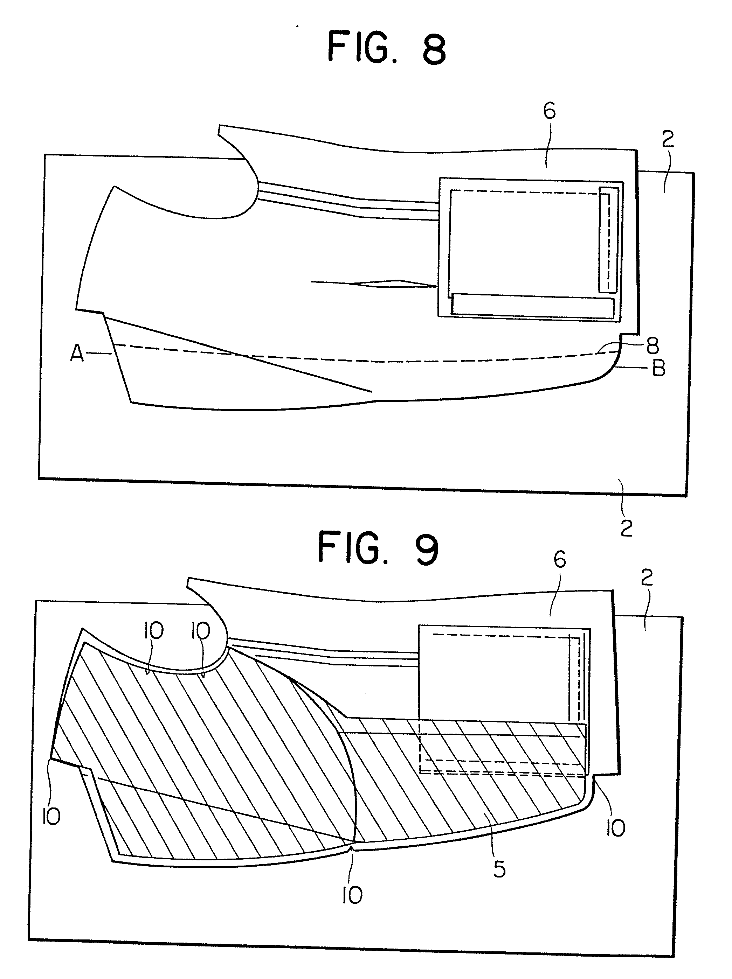

Thus, the haircloth 4 having applied thereto the adhesive 3 is set while fitting the warp 7 of the haircloth 4 to the A-B line on a base board 2, for example, the fixed base of a press which has usually the necessary concave and convex surface as shown in Fig. 6. Subsequently, the front bodice 6 is put on the haircloth 4 while fitting the warp 8 of the front bodice 6 to the line 7 as in Fig. 4. In this embodiment, the haircloth 4 is first put on the base board 2 and the front bodice 6 is then put on the haircloth 4, but in another embodiment, the front bodice 6 is first put on the base board as shown in Fig. 8 and the haircloth 4 is thereafter put on the front bodice 6 while fitting the points 10 as shown in Fig. 9. If necessary, the shoulder pad 5 having applied thereto the adhesive 3 is placed in the predetermined position under the haircloth 4 as in Fig. 5, whereby the preparatory working before basting is completed. When the warp of the cloth is adjusted to the A-B line on the base board, the use of a photoelectric tube, for example, may facilitate the working.

The resulting assembly consisting of the haircloth 4, the front bodice 6 and if neccessary, the shoulder pad 5 on the fixed base 2 of a press is heat-pressed by means of the movable member 1 of the press at a predetermined temperature (for example, 60 - 200°C, preferably 100 - 150°C) under a predetermined pressure (for example, 0.01 - 2 kg/cm$^2$, preferably 0.05 - 0.15 kg/cm$^2$) for a predetermined period of time (for example, 1 - 600 sec, preferably 5 - 60 sec) while applying steam thereto, thereby appropriately securing the haircloth 4, the front bodice 6 and if neccessary, the shoulder pad 5 to one another (see Fig. 6). Thus, the basting of interlining which is the most difficult step in the process for tailoring clothes can be carried out simply in a very short period of time by the present basting method regardless of the technical level of worker. The thus basted assembly consisting of haircloth 4, the front bodice 6 and if neccessary, the shoulder pad 5 is subjected to a conventional final sewing, after which the portions secured with the adhesive can easily be peeled off by lightly pulling the haircloth 4 and the front bodice 6 at the secured portions in the opposite direction without damaging the cloth. As a result, unpleasant appearance such as puckering resulting from the difference in shrinkage between the secured portion and the unsecured portion, said appearance being able to be visually recognized from the outside of the front bodice, can be removed. Moreover, since the adhesive is thermosetting, the adhesive once cured by heat-pressing cannot secure again the front bodice to the interlining even when the suit is subjected to finishing press, and hence, no unpleasant appearance such as puckering results from the finishing press. In addition, the present basting method does not require the conventional step of withdrawing the basting threads, and hence, the disadvantages resulting from the said conventional step can be overcome by the present basting method.

Though not shown in the drawings, the adhesive 3 may be applied to the front bodice 6 in stead of the haircloth 4, and the above procedure may be repeated.

Further, a method of basting the facing is explained below.

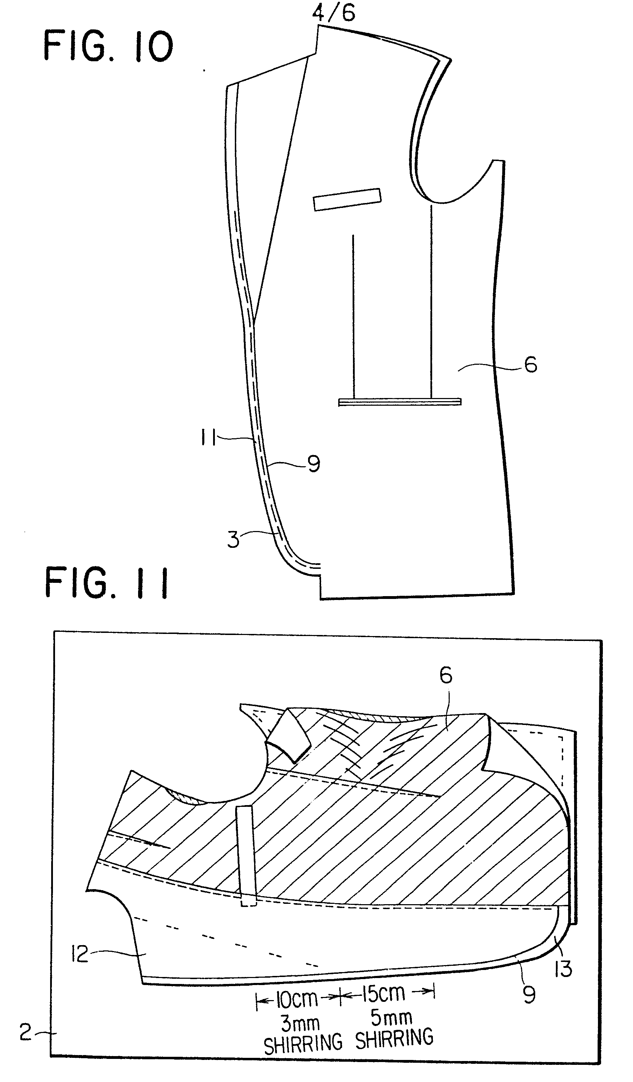

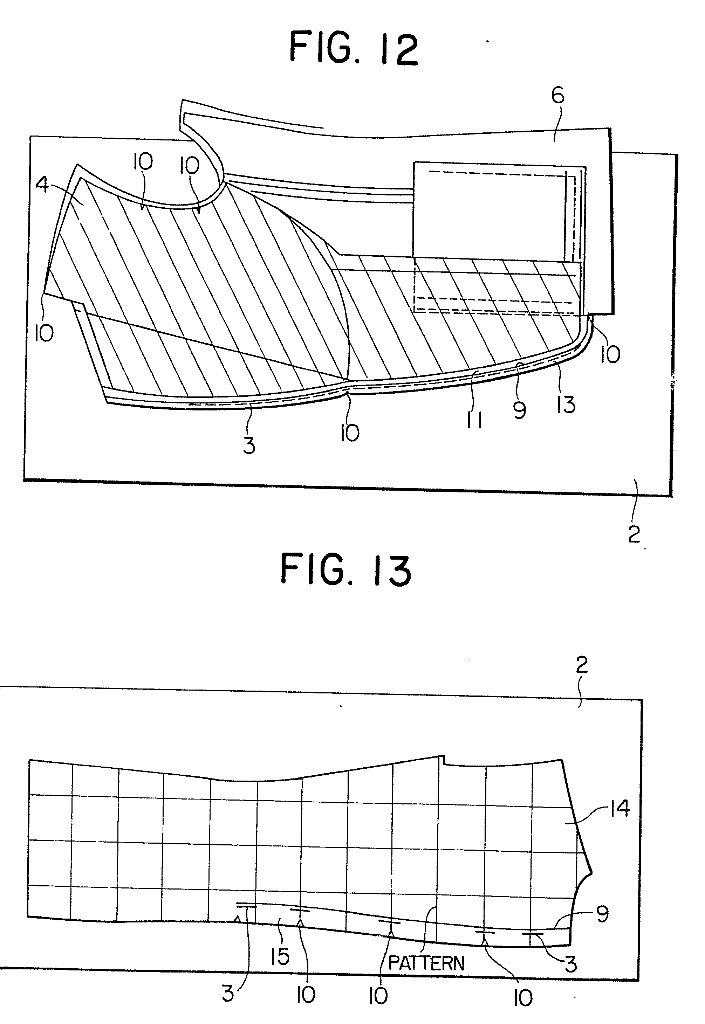

As shown in Fig. 10, the preparatory working for basting the facing in tailoring clothes includes the step of applying the thermosetting adhesive 3 to the margine to sew up 11 of the front bodice 6 at a position 0.1 - 5 mm distant, preferably 0.3 - 2 mm, distant from the final sewing line 9 for facing in the form of a solid line or broken line having a width of 0.1 - 1 mm (in the case of broken line, the length and space can appropriately be selected), and setting the front bodice 6 having applied thereto the adhesive on a base board such as the fixed base of a press, putting the facing 12 on the front bodice 6 while fitting points on the facing 12 to the corresponding points on the front bodice 6 so as to give the necessary shirring amount as shown in, for example, Fig. 11, and heat-pressing the resulting assembly by means of an iron or a press at a temperature of 60 - 200°C at a pressure of 0.01 - 2 kg/cm$^2$ for a period of 1 - 600 seconds to secure the facing to the front bodice. Subsequently, the thus secured assembly is subjected to final sewing in a conventional manner. After the final sewing, the margines to sew up 11 and 13 of the front bodice and the facing are separated, and simultaneously, the secured portions are also easily peeled off (see Fig. 12).

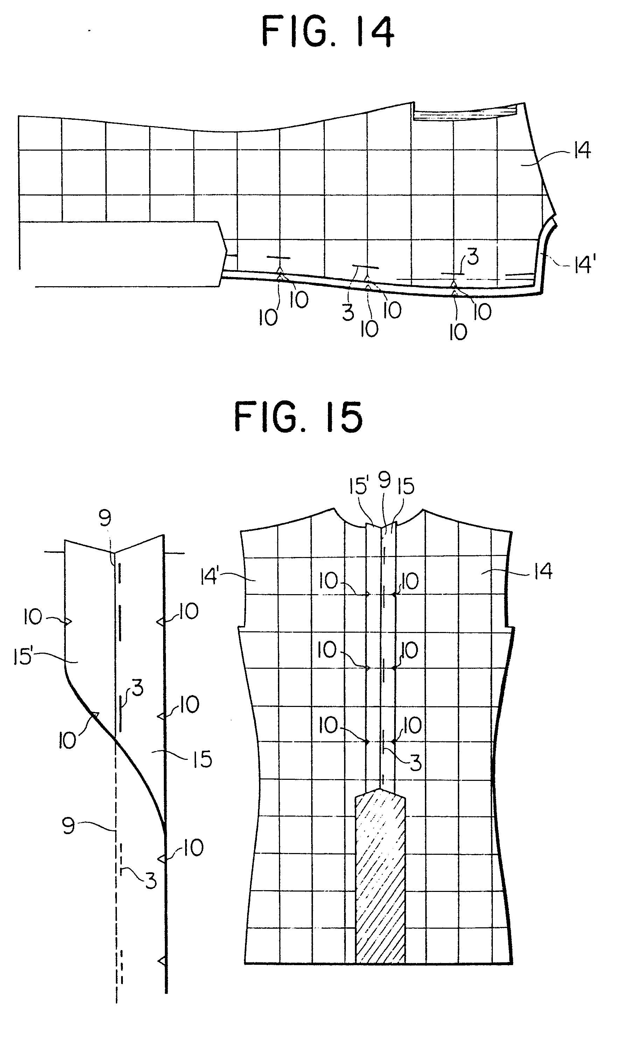

A further embodiment of the present basting method is the basting for the final sewing of back bodices 14 and 14' at the back center. As shown in Fig. 13, the thermosetting adhesive 3 is applied to the margine to sew up 15 of one of the back bodices 14 and 14' along the final sewing line 9 at the back center but 0.1 - 5 mm distant, preferably 0.3 - 2 mm distant, from said final sewing line 9 in the form of a solid line or broken line having a width of 0.1 - 1 mm. The back bodice 14 having applied thereto the adhesive is set on a flat board 2 such as the fixed base of a press, after which the other back bodice 14' is put thereon while fitting points on the two back bodices for preventing puckering from being caused and fitting the patterns of both back bodices 14 and 14' as shown in Fig. 14, and the resulting assembly is heat-pressed by means of an iron or the movable member of the press at a temperature of 60 - 200°C at a pressure of 0.01 - 2 kg/cm$^2$ for a period of 1 - 600 seconds, thereby securing the two back bodices 14 and 14' at the back center line. The thus secured assembly is subjected to final sewing in a conventional manner, and then to separation of the margines, whereby the portions secured with the adhesive are easily peeled off (see Fig. 15). This basting method can also be applied to the final sewing of side piece and the front bodice or back bodice, to the final sewing of top sleeve and under sleeve, and to the final sewing of top side and under side of pantaloons.

The basting of the back bodices with a thermosetting adhesive, particularly when it is applied to a thin cloth for summer suit, can prevent the slippage of cloth resulting from sewing by a sewing machine.

As can be seen from the above description, the present basting method can give a product having a uniform and stable quality. Moreover, the present basting method can be applied to not only the basting of interlinings including attaching a shoulder pad but also all other basting septs in tailoring. By applying the present basting method, the sewing process can be partially automatized even in the case of tailoring summer suits, and can be shorted in time, whereby the quality of product and the production efficiency can be enhanced.

The thermosetting adhesive comprising as the main component a liquid, addition-reaction-type silicone polymer can secure provisionally sheets of cloth at a considerably lower temperature under a considerably lower pressure than those for the conventional permanent adhesives to be used for securing sheets of cloth (hot-melt adhesives such as polyester, polyamides and the like). Therefore, the cloth is prevented from being damaged and the pressing time can be shortened. Accordingly, sheets of cloth can easily be secured by means of an iron, and the thus secured sheets of cloth can easily be peeled off, but the adhesive cannot secure the thus peeled sheets of cloth even when heat-pressing is applied thereto again.

This invention is further explained in detail below referring to Examples, but it should be interpreted that this invention should not be limited to the Examples. The "Silicone A", "Silicone B", "Silicone C", "Silicone D", "Silicone E", "Silicone F", and "Silicone G" used in the Examples are as follows, and the part used in the Examples is by weight unless otherwise specified:

Silicone A:

Polymethylvinylsiloxane, viscosity at 20°C of 5,000 cP;

Silicone B:

Polymethylhydrogensiloxane, viscosity at 20°C of 5,000 cP;

Silicone C:

Polymethylvinylsiloxane, viscosity at 20°C of 3,000 cP;

Silicone D:

Polymethylhydrogensiloxane, viscosity at 20°C
of 3,000 cP;

Silicone E:

Polytrifluoropropylallylsiloxane, viscosity at
20°C of 3,000 cP;

Silicone F:

Polytrifluoropropylhydrogensiloxane, viscosity at
20°C of 3,000 cP;

Silicone G:

Polyphenylvinylsiloxane, viscosity at 20°C
of 2,000 cP.

Further, in the Examples, the viscosity is a value
obtained by means of a rheometer "RHEOMAT 30" manufactured
by Contraves at a shear rate of 10 sec$^{-1}$.


Example 1 - 6

With the following compounding recipies, various
components were mixed by means of an internal mixer to
prepare six adhesives:


Example 1

| Silicone A | 50 parts |
|---|---|
| Silicone B | 50 parts |
| 2,4-Dichlorobenzoyl peroxide | 4 parts |
| Chloroplatinic acid | 0.1 part |
| Silicone dioxide (hydrous) | 20 parts |

The viscosity at 20°C of said adhesive is 600,000 cP.

Example 2

| | |
|---|---|
| Silicone C | 50 parts |
| Silicone D | 50 parts |
| 2,4-Dichlorobenzoyl peroxide | 8 parts |
| Silicone dioxide (anhydrous) | 20 parts |
| Talc | 100 parts |
| Dodecyltrimethylammonium chloride | 0.5 part |

The viscosity at 20°C of said adhesive is 1,500,000 cP.

Example 3

| | |
|---|---|
| Silicone E | 50 parts |
| Silicone F | 50 parts |
| Benzoyl peroxide | 5 parts |
| Chloroplatinic acid | 0.5 part |
| Silicone dioxide (hydrous) | 30 parts |

The viscosity at 20°C of said adhesive is 1,000,000 cP.

Example 4

| | |
|---|---|
| Silicone G | 50 parts |
| Silicone B | 50 parts |
| 2,4-Dichlorobenzoyl peroxide | 15 parts |
| Calcium carbonate | 120 parts |

The viscosity at 20°C of said adhesive is 200,000 cP.

Example 5

| | |
|---|---|
| Silicone A | 50 parts |
| Silicone B | 50 parts |
| Chloroplatinic acid | 0.2 part |

Silicone dioxide (hydrous)              25 parts

The viscosity at 20°C of said adhesive is 1,000,000 cP.


Example 6

    Silicone C                              50 parts

    Silicone D                              50 parts

    Dicumyl peroxide                         8 parts

    Trimethylolpropane trimethacrylate  8 parts

    Talc                                    50 parts

    Octadecyltrimethylammonium chloride  1 part

The viscosity at 20°C of said adhesive is 500,000 cP.

Each of the adhesive thus obtained was applied to a piece of wool cloth for suit in the form of a line having a width of 2.5 mm and a thickness of 0.24 mm and a piece of haircloth was put thereon, after which the resulting assembly was heat-pressed at a temperature of 120°C at a pressure of 0.15 kg/cm$^2$ for 30 sec. Thereafter, the pieces of cloth were drawn at an angle of 90° at a rate of 50 mm/min to examine the necessary tensile force for peeling the pieces (peeling strength). The results obtained are shown in Table 1.


Table 1

| Example No. | 1 | 2 | 3 | 4 | 5 | 6 |
|---|---|---|---|---|---|---|
| Peeling strength (g) | 900 | 1020 | 950 | 1200 | 860 | 950 |

As is clear from the results in Table 1, all the adhesives indicate a peeling strength of more than 500 g by heat-pressing at a relatively low temperature at a relatively low pressure for a short period of time, and when the adhesives have a peel strength of more than 500 g, it can be judged that they are not objectionable in practice.

Example 7

| Silicone A | 50 parts |
|---|---|
| Silicone B | 50 parts |
| 2,4-Dichlorobenzoyl peroxide | 8 parts |
| Silicone dioxide (hydrous) | 20 parts |

The above components were treated in the same manner as in Example 1 to prepare an adhesive.

Using this adhesive, a piece of wool cloth for suit and a piece of haircloth were secured under the same conditions as in Example 1, and the peeling strength was measured in the same manner as in Example 1, to obtain the results shown in Table 2.

Table 2

| Run No. | | 1 | 2 | 3 | 4 | 5 |
|---|---|---|---|---|---|---|
| Con-dition | Temperature (°C) | 140 | 120 | 100 | 140 | 120 |
| | Time (sec.) | 50 | 60 | 50 | 30 | 40 |
| Peeling strength (g) | | 1675 | 1200 | 572 | 1870 | 1180 |

- 19 -                                        0164459

Furthermore, the same procedure as above was repeated, except that a piece of cotton cloth or a piece of polyester cloth was substituted for the wool cloth, the temperature was changed to 120°C, and the time was changed to 40 sec., to obtain a peeling strength of 1015 g for the cotton cloth and 580 g for the polyester cloth.


Example 8

| Silicone A | 100 parts |
| Silicone dioxide (anhydrous) | 15 parts |
| 1,3-Butylene glycol diacrylate | 10 parts |
| Dicumyl peroxide | 8 parts |

The above components were treated in the same manner as in Example 1 to prepare an adhesive.

The same procedure as in Example 1 was repeated, except that said adhesive was substituted, the application width was changed and the pressing temperature and time were changed to at 110°C for 40 sec. The results obtained are shown in Table 3.

Table 3

| Run No. | 1 | 2 | 3 |
|---|---|---|---|
| Application width (cm) | 2.5 | 4.0 | 5.0 |
| Peeling strength (g) | 723 | 1217 | 1626 |

0164459

In each of Run Nos. 1 to 3, the state of cloth at the secured portions was observed with the naked eye and the texture of the cloth was examined by hand.  As a result, it was confirmed that in each case, the texture was comparable to that obtained by sewing.

M&C FOLIO: 799P48283                    WANGDOC:0339C

CLAIMS

1.  A method of basting sheets of cloth in the tailoring
of clothes which comprises applying to one of the sheets
of cloth a thermosetting adhesive comprising as the main
component a liquid, addition-reaction-type silicone
polymer, setting the cloth with the adhesive and the
other sheet or sheets of cloth on a support surface so
that the adhesive is present between the sheets of
cloth, and heat-pressing the resulting assembly to
secure the sheets with the adhesive.

2.  A method of basting according to claim 1, wherein
the basting is conducted between an interlining, a
shoulder pad and a suit cloth.

3.  A method of basting according to claim 1, wherein
the basting is conducted between an interlining and a
suit cloth.

4.  A method of basting according to claim 3, wherein
the interlining is haircloth, and the suit cloth is a
front bodice.

5. A method of basting according to claim 1, wherein the basting is conducted between two sheets of suit cloth.

6. A method of basting according to claim 5, wherein one of the sheets is a front bodice and the other is a facing.

7. A method of basting according to claim 5 wherein the two sheets are back bodices.

8. A method of basting according to claim 4, which comprises applying the adhesive at the desired place of the haircloth, setting the haircloth with the adhesive on its upside on the fixed base of a press so that the warp of the haircloth is positioned to a predetermined line, putting the front bodice on the haircloth so that the warp of the front bodice is positioned to the warp of the haircloth, and pressing the resulting assembly by means of the movable member of the press at a predetermined temperature under a predetermined pressure for a predetermined period of time to secure the front bodice to the haircloth.

9. A method of basting according to claim 6, which comprises applying the adhesive to the margin to be sewn up the front bodice, putting the facing thereon while fitting points on the facing to corresponding points on the front bodice and pressing the resulting assembly by means of a hot press or iron at a predetermined temperature under a predetermined pressure for a predetermined period of time to secure the facing to the front bodice.

10. A method of basting according to claim 5, which comprises applying the adhesive in the form of a fine line to the margin to be sewn up of one of the two sheets of cloth, putting thereon the other sheet of cloth while fitting the patterns or points of the two sheets, pressing the resulting assembly by a hot press or an iron at a predetermined temperature under a predetermined pressure for a predetermined period of time to secure the sheets of cloth, and thereafter subjecting the secured assembly to final sewing.

11. A method of basting according claim 4, which comprises applying the adhesive to the peripheral portions of the haircloth and a shoulder pad, putting the haircloth with the adhesive in its upside on the fixed base of a press while fitting the warp of the cloth to a predetermined line on the base, putting the front bodice thereon while fitting the warp of the front bodice to that of the haircloth, putting the shoulder pad with the adhesive on its upside between the base and

0164459

24

the haircloth at the predetermined position, and then pressing the resulting assembly by means of the movable member of the press at a predetermined temperature under a predetermined pressure for a predetermined period of time, to secure the front bodice, the haircloth and the shoulder pad.

12. A method of basting according to claim 4, which comprises applying the adhesive to the predetermined peripheral portions of the haircloth, setting the front bodice on the fixed base of a press while fitting the warp of the front bodice to the predetermined line on the fixed base, putting thereon the haircloth with the adhesive on its downside while fitting the warp of the haircloth to the warp of the front bodice, and then pressing the resulting assembly by means of the movable member of the press at a predetermined temperature under a predetermined pressure for a predetermined period of time, to secure the haircloth and the front bodice.

13. A method according to any preceding claim, wherein the thermosetting adhesive includes a curing agent.

14. A method according to any preceding claim, wherein the thermosetting adhesive includes a curing agent and an antistatic agent.

15. A method according to any preceding claim, wherein the silicone polymer is a mixture of a poly-$C_{1-12}$-alkylhydrogensiloxane, poly-halogen-substituted-$C_{1-12}$-alkylhydrogensiloxane, polyphenylhydrogensiloxane or poly-alkyl or halogen-substituted phenylhydrogensiloxane with a poly-$C_{1-12}$alkyl-$C_{2-12}$alkenylsiloxane, a poly-halogen-substituted $C_{1-12}$alkyl-$C_{2-12}$alkenyl-siloxane, a polyphenyl-$C_{2-12}$alkenylsiloxane, or a poly-alkyl or halogen-substituted phenyl-$C_{2-12}$alkenyl-siloxane.

0164459

# FIG. 1

# FIG. 2

# FIG. 3

# FIG. 4

# FIG. 5

# FIG. 6

# FIG. 7

# FIG. 8

# FIG. 9

# FIG. 10

# FIG. 11

|←10cm→|←15cm→|
3mm        5mm
SHIRRING  SHIRRING

# FIG. 12

# FIG. 13

0164459

# FIG. 14

# FIG. 15

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| A | DE-A-1 018 295 (BULLMER) * Claim * | 1 | D 06 M 17/00 A 41 D 27/24 A 41 D 27/06 |
| A | FR-A-2 277 671 (DUPRE) * Claims * | 1-8 | |
| A | DE-A-3 141 671 (BAYER) * Claims * | 1,13-15 | |
| A | US-A-3 137 864 (OSTMANN) * Claims * | 1 | |

TECHNICAL FIELDS SEARCHED (Int Cl 4)

D 06 M
A 41 D

The present search report has been drawn up for all claims

| Place of search | Date of completion of the search | Examiner |
|---|---|---|
| THE HAGUE | 16-04-1985 | HELLEMANS W.J.R. |